# FASCICULE DE BREVET EUROPEEN

(11) **EP 3 163 063 B1**
(45) Date de publication et mention de la délivrance du brevet: **05.12.2018**
(21) Numéro de dépôt: 16195416.9
(22) Date de dépôt: 25.10.2016
(51) Int. Cl.: F02K 9/48, F02K 9/50, F02K 9/68, F02K 9/94, F02K 9/42, F02K 9/46, F02K 9/56

(54) **PROCÉDÉ DE RÉGULATION DE LA PRESSION AU SEIN D'UN PREMIER RÉSERVOIR D'ERGOL DE MOTEUR FUSÉE**
VERFAHREN ZUR DRUCKREGULIERUNG IN EINEM ERSTEN TREIBMITTELTANK EINES RAKETENMOTORS
METHOD FOR ADJUSTING THE PRESSURE INSIDE A FIRST PROPELLANT TANK OF A ROCKET ENGINE

(30) Priorité: 26.10.2015 FR 1502259
(43) Date de publication de la demande: 03.05.2017
(73) Titulaire: ArianeGroup SAS, 75015 Paris (FR)
(72) Inventeur: HUE, Valentin, 27200 VERNON (FR); LE GONIDEC, Serge, 27200 VERNON (FR)
(74) Mandataire: Milien, Jean-Baptiste Aurélien

(56) Documents cités:
- EP-A1- 1 241 341
- WO-A1-2015/019000
- US-A- 2 683 963

## Description

### DOMAINE DE L'INVENTION

La présente invention concerne un procédé de régulation de la pression au sein d'un premier réservoir d'ergol de moteur fusée.

### ETAT DE LA TECHNIQUE ANTERIEURE

Un moteur-fusée est habituellement un moteur dans lequel les gaz en sortie de la chambre de combustion sont évacués via une tuyère de manière à développer une poussée. Les gaz sont en général issus de la combustion d'un premier ergol avec un deuxième ergol. Par exemple, le premier ergol est un comburant, tel que de l'oxygène, tandis que le deuxième ergol est un carburant, tel que de l'hydrogène ou du méthane.

Les ergols sont stockés dans des réservoirs à l'état liquide, et ces réservoirs sont maintenus sous pression afin d'assurer que le débit d'ergols dirigé vers la chambre de combustion soit régulier. Pour cela, un prélèvement de chaque ergol à partir de son réservoir passe dans un échangeur thermique afin d'y être chauffé et vaporisé, avant d'être réinjecté à l'état gazeux dans son réservoir de manière à former, dans chaque réservoir, un ciel gazeux d'ergol sous pression.

Un tel moteur-fusée est généralement conçu pour respecter des phases de vol dites « phases de propulsion », pendant lesquelles le moteur doit développer une poussée apte à diriger la fusée, et des phases dites « phases balistiques » pendant lesquelles le moteur est éteint, de sorte que la fusée n'est soumise qu'aux lois de la balistique.

La première partie du vol est une phase de propulsion, pendant laquelle une forte poussée est nécessaire, pour mettre la fusée en orbite. Ensuite, pour des manoeuvres orbitales et le retour sur terre, des phases de propulsion alternent avec des phases balistiques, une faible poussée appliquée sur des laps de temps relativement courts étant suffisante.

Il importe cependant que le moteur puisse redémarrer rapidement et dans de bonnes conditions à l'issue d'une phase balistique. Ceci signifie notamment que, même lors d'une phase balistique, pendant laquelle le moteur n'est pas actif, une pression suffisante doit être assurée dans les réservoirs d'ergols liquides pour que le débit nécessaire au redémarrage du moteur puisse être obtenu sans délai. En d'autres termes, il importe de vaporiser des prélèvements d'ergols et de les réinjecter dans les réservoirs, même pendant une phase balistique, alors que le moteur est inactif. Dans le même temps, il est important de faire en sorte que la vaporisation des ergols soit réalisée sans dégrader notablement le rendement du moteur pendant la phase de propulsion.

Les dispositifs de régulation de la pression connus pour réguler la pression au sein des réservoirs d'ergols de moteur-fusée, et leur mise en oeuvre sont généralement complexes, et impliquent notamment la présence et le pilotage de plusieurs vannes à ouvertures variables. Il existe donc un besoin de simplification. Un exemple de l'état de la technique antérieure est divulgué dans WO2015019000.

### PRESENTATION DE L'INVENTION

Un mode de réalisation concerne un procédé de régulation de pression au sein d'un premier réservoir d'ergol de moteur-fusée, ledit moteur-fusée comprenant un premier réservoir d'ergol contenant un premier ergol et un deuxième réservoir d'ergol contenant un deuxième ergol distinct du premier ergol, et un dispositif de régulation de la pression au sein du premier réservoir comprenant un générateur de gaz et un échangeur thermique (ou premier échangeur thermique) coopérant avec le générateur de gaz de manière à vaporiser du premier ergol avant sa réintroduction dans le premier réservoir, le générateur de gaz et l'échangeur thermique étant tous les deux alimentés en premier ergol par une unique première motopompe à débit variable tandis que le générateur de gaz est alimenté en deuxième ergol par une unique deuxième motopompe à débit variable, caractérisé en ce que le débit de la première motopompe est piloté en fonction d'un premier paramètre tandis que le débit de la deuxième motopompe est piloté en fonction d'un deuxième paramètre distinct du premier paramètre.

On comprend donc que le générateur de gaz génère de la chaleur par la combustion d'un mélange de premier et de deuxième ergols, cette chaleur étant utilisée au moins en partie par l'échangeur de chaleur pour vaporiser du premier ergol, ce premier ergol vaporisé (i.e. sous forme gazeuse) étant ensuite réintroduit dans le premier réservoir, grâce à quoi on peut augmenter la pression au sein du premier réservoir.

On comprend également que la première motopompe est commune au générateur de gaz et à l'échangeur thermique. Ainsi, le débit issu de la première motopompe est réparti entre le générateur de gaz et l'échangeur thermique. Bien entendu, la première motopompe est distincte de la deuxième motopompe.

Les inventeurs ont constaté qu'en pilotant le débit de chaque motopompe indépendamment l'un de l'autre, et en fonction de paramètres qui sont distincts et non corrélés, on arrive à réguler de manière simple et fiable la pression au sein du premier réservoir. Bien entendu, les paramètres sont des paramètres relatifs aux éléments du dispositif de régulation, y compris le premier réservoir. Par exemple, ces paramètres peuvent être le débit d'ergol, la pression ou la température en un point donné du dispositif de régulation, y compris le premier réservoir.

Il est ainsi possible de supprimer les vannes à ouverture variable des dispositifs de régulation de pression de l'état de la technique, et de ne conserver que des éventuelles vannes tout-ou-rien d'isolement des composants, ces dernières vannes ayant uniquement une fonction de sécurité et pas de régulation. De telles vannes tout-ou-rien sont bien entendu plus simples, plus fiables, et moins couteuses que les vannes à ouverture variable de l'état de la technique.

Par ailleurs, la régulation de pression étant réalisée par des motopompes, ces motopompes faisant partie de circuits auxiliaires, i.e. ne faisant pas partie des circuits d'alimentation de la chambre de combustion du moteur-fusée, le procédé de régulation est applicable tant pendant les phases de propulsion que pendant les phases balistiques.

Dans certains modes de réalisation, le premier paramètre est la pression au sein du premier réservoir.

En d'autres termes, le procédé de régulation comprend une étape de mesure de la pression réelle au sein du premier réservoir, une étape de comparaison entre la pression réelle et une pression prédéterminée, et une étape de pilotage du débit de la première motopompe en fonction du résultat de l'étape de comparaison de manière à réduire la différence entre la pression réelle et la pression prédéterminée. Par exemple, la pression prédéterminée est la pression désirée (ou pression consigne) au sein du premier réservoir.

Ainsi, pour augmenter/diminuer la pression au sein du premier réservoir, on augmente/diminue le débit de la première motopompe. En effet, en augmentant/diminuant le débit de la première motopompe, on augmente/diminue la quantité de premier ergol amenée vers l'échangeur de chaleur, et donc le volume de premier ergol vaporisé et réinjecté dans le premier réservoir, grâce à quoi on augmente/diminue la pression au sein du premier réservoir.

Dans certains modes de réalisation, le deuxième paramètre est la température du générateur de gaz.

En d'autres termes, le procédé de régulation comprend une étape de mesure de la température réelle au sein du générateur de gaz, une étape de comparaison entre la température réelle et une température prédéterminée, et une étape de pilotage du débit de la deuxième motopompe en fonction du résultat de l'étape de comparaison de manière à réduire la différence entre la température réelle et la température prédéterminée. Par exemple, la température prédéterminée est la température désirée (ou température consigne) au sein du générateur de gaz pour assurer le bon fonctionnement du générateur de gaz afin d'éviter son extinction (i.e. pour assurer un flux thermique suffisant pour vaporiser l'ergol au sein de l'échangeur) tout en restant en deçà de la température maximale acceptable.

La température au sein du générateur de gaz est fonction du rapport de mélange entre les deux ergols, à savoir le débit de premier ergol injecté dans le générateur de gaz divisé par le débit du deuxième ergol injecté dans le générateur de gaz. De plus, en fonctionnement normal, ce rapport est toujours inférieur à un (1), de sorte que le débit du premier ergol est toujours inférieur au débit du deuxième ergol. Ainsi, pour augmenter/diminuer la température du générateur de gaz, pour un débit de la première motopompe donné, on diminue/augmente le débit de la deuxième motopompe de manière à faire tendre le rapport de mélange des deux ergols vers un ou l'en éloigner (i.e. au plus le rapport est proche de 1, au plus la température est élevée, et inversement).

Pour résumer, la pression au sein du premier réservoir et la température du générateur de gaz doivent être égales à des valeurs prédéterminées pour le bon fonctionnement du moteur-fusée. Lorsque le premier paramètre est la pression au sein du premier réservoir et que le deuxième paramètre est la température du générateur de gaz, le pilotage du débit de la première motopompe permet d'ajuster la pression au sein du premier réservoir tandis que le pilotage du débit de la deuxième motopompe permet d'ajuster le débit du deuxième ergol dans le générateur de gaz en fonction de la variation de débit de la première motopompe pour ajuster la pression au sein du premier réservoir, de manière à ce que la température au sein du générateur de gaz reste à la valeur désirée, et donc assurer la pérennité de l'alimentation thermique de l'échangeur thermique. Par exemple, ces deux paramètres que sont la pression au sein du premier réservoir et la température du générateur de gaz sont chacun régulés par un sous-procédé de régulation, ces deux sous-procédés étant couplés par exemple par un correcteur multivariables.

Dans certains modes de réalisation, le débit de la première motopompe est piloté uniquement en fonction du premier paramètre tandis que le débit de la deuxième motopompe est piloté uniquement en fonction du deuxième paramètre.

Ces deux paramètres étant suffisants pour réguler la pression au sein du premier réservoir, en se limitant à la prise en compte de ces deux paramètres uniquement on simplifie le procédé de régulation ainsi que le dispositif de régulation associé.

Dans certains modes de réalisation, la régulation de la pression au sein du deuxième réservoir d'ergol est indépendante de la régulation de pression au sein du premier réservoir.

En d'autres termes, la régulation de la pression au sein du deuxième réservoir est réalisée indépendamment du débit des première et deuxième motopompes. On s'assure ainsi que la régulation d'un réservoir n'est pas réalisée au détriment de la régulation de l'autre réservoir.

Dans certains modes de réalisation, le premier ergol et le deuxième ergol sont des ergols liquides cryogéniques.

Le procédé est en effet particulièrement bien adapté à la régulation de la pression dans un premier réservoir contenant un ergol liquide cryogénique.

Dans certains modes de réalisation, le premier ergol est de l'oxygène tandis que le deuxième ergol est de l'hydrogène ou du méthane.

Le procédé est en effet particulièrement bien adapté à la régulation de la pression dans un premier réservoir contenant de l'oxygène.

Un mode de réalisation concerne également un programme d'ordinateur comportant des instructions pour l'exécution du procédé de régulation de pression selon l'un quelconque des modes de réalisation décrits dans le présent exposé lorsque ledit programme est exécuté par un ordinateur.

Un mode de réalisation concerne également un support d'enregistrement lisible par ordinateur sur lequel est enregistré le programme d'ordinateur selon l'un quelconque des modes de réalisation décrits dans le présent exposé.

Le support d'enregistrement peut être n'importe quelle entité ou dispositif capable de stocker un programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette (« floppy disc ») ou un disque dur.

Alternativement, le support d'enregistrement peut être un circuit intégré dans lequel le programme est incorporé, le circuit étant adapté pour exécuter ou pour être utilisé dans l'exécution du procédé en question.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un moteur-fusée, et
- la figure 2 représente les différentes étapes d'un procédé de régulation de la pression au sein du premier réservoir du moteur-fusée de la figure 1.

### DESCRIPTION DETAILLEE D'EXEMPLES DE REALISATION

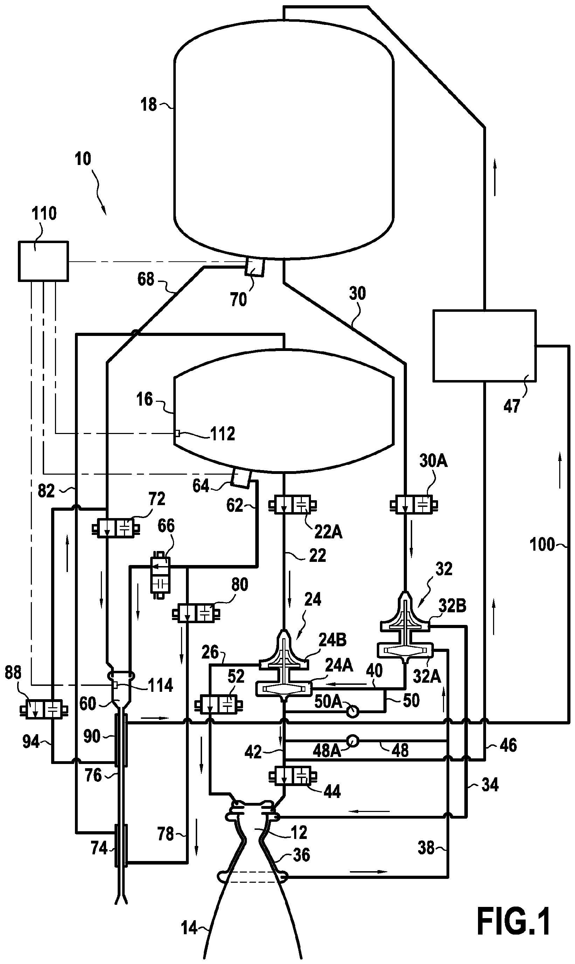

La figure 1 représente un moteur-fusée 10 ayant une chambre de combustion 12 et une tuyère 14 présentant un divergent. La chambre de combustion 10 est alimentée en ergols à partir d'un premier réservoir 16 contenant un premier ergol, par exemple un ergol oxydant tel que de l'oxygène, et est également alimenté en deuxième ergol à partir d'un deuxième réservoir 18 contenant un deuxième ergol, par exemple un ergol réducteur, par exemple de l'hydrogène ou du méthane. L'ergol réducteur sert de carburant, tandis que l'ergol oxydant sert de comburant pour la combustion.

L'alimentation en premier ergol à partir du premier réservoir 16 comprend une première conduite principale 22 débitant dans une première turbopompe 24 et une première conduite d'injection 26 reliant la sortie de la première turbopompe 24 à la chambre de combustion 12. L'alimentation en deuxième ergol à partir du deuxième réservoir 18 comprend une deuxième conduite principale d'alimentation 30 débitant dans une deuxième turbopompe 32 et une deuxième conduite d'injection 34 reliée à la sortie de la deuxième turbopompe 32.

Des vannes d'autorisation 22A et 30A sont respectivement disposées sur les conduites principales d'alimentation 22 et 30.

En l'espèce, le moteur 10 de type "expander", c'est-à-dire un moteur dans lequel du deuxième ergol est prélevé et vaporisé afin de fournir de l'énergie à certaines parties du moteur. Plus précisément, la deuxième conduite d'injection 34 débite dans un réchauffeur 36 qui coopère avec la paroi de la chambre de combustion 12 pour, en phase de propulsion, chauffer le deuxième ergol circulant dans ce réchauffeur de manière à le vaporiser. En sortie du réchauffeur 36, le deuxième ergol est amené par une conduite d'alimentation 38 dans la partie turbine 32A de la deuxième turbopompe 32 pour entraîner sa turbine de manière à actionner sa partie pompe 32B. En sortie de la partie turbine 32A, le deuxième ergol est amené par une conduite d'amenée 40 à l'entrée de la partie turbine 24A de la première turbopompe 24 pour entraîner sa turbine de manière à actionner sa partie pompe 24B. En sortie de la partie turbine 24A, le deuxième ergol est amené à l'entrée de la chambre de combustion 12 par une conduite d'injection 42. Une vanne d'isolement 44 est disposée sur cette conduite d'injection 42 qui est reliée au deuxième réservoir 18 par l'intermédiaire d'un système de vannes de pressurisation et de détente 47. Ainsi, le deuxième ergol vaporisé retourne au réservoir 18 pour y former un ciel gazeux dont la pression peut être régulée par le système 47.

Ainsi, le moteur-fusée 10 comprend un circuit régénératif d'échange de chaleur qui utilise la chaleur de combustion de la chambre de combustion 12 pour vaporiser du deuxième ergol. Ce circuit régénératif d'échange de chaleur comprend le réchauffeur 36 et les conduites 38, 40, 42 et 46. Une conduite de bipasse 48 avec une vanne à ouverture variable 48A est disposée entre les conduites 38 et 42 pour bipasser les entrées des turbines. Une autre conduite de bipasse 50 avec une vanne à ouverture variable 50A est disposée entre la sortie de la partie turbine de la deuxième turbopompe 32 et la conduite d'injection 42 pour bipasser la partie turbine 24A de la première turbopompe 24.

L'injection en premier ergol dans la chambre de combustion 12 s'opère directement par la conduite d'injection 26 qui s'étend entre la sortie de la première turbopompe 26 et l'entrée de la chambre d'injection 12. Une vanne d'isolement 52 est disposée sur la conduite 26 pour autoriser ou stopper le débit d'injection.

Le moteur-fusée 10 comprend un dispositif de régulation de la pression au sein du premier réservoir 16 comprenant un générateur de gaz 60 et un premier échangeur thermique 74 qui coopère avec le générateur de gaz 60. Une unique première motopompe 64 à débit variable alimente le générateur de gaz 60 et le premier échangeur thermique 74 en premier ergol. Une unique deuxième motopompe 70 à débit variable alimente le générateur de gaz 60 en deuxième ergol. Le générateur de gaz 60 coopère par ailleurs avec un deuxième échangeur thermique 90 distinct et indépendant du premier échangeur thermique 74, qui dans cet exemple est alimenté également par la deuxième motopompe 70 en deuxième ergol.

Le générateur de gaz 60 est alimenté en premier ergol par une première conduite d'alimentation 62 raccordée au premier réservoir 16 par la première motopompe 64 à débit variable. Une première vanne d'alimentation 66 est disposée sur la première conduite d'alimentation 62. Le générateur de gaz 60 est alimenté en deuxième ergol par une deuxième conduite d'alimentation 68 reliée au deuxième réservoir 18 par la deuxième motopompe 70 à débit variable. Une deuxième vanne d'alimentation 72 est disposée sur la deuxième conduite d'alimentation 68. On notera que les conduites d'alimentations 62 et 68 reliant les réservoirs au générateur de gaz 60 forment des conduites auxiliaires en comparaison des conduites principales d'alimentation 22 et 30.

Le premier échangeur thermique 74 coopère avec le générateur de gaz 60 pour vaporiser du premier ergol, l'alimentation en premier ergol étant réalisée par la première motopompe 64. Ce premier échangeur thermique 74 peut par exemple être formé par un tube à double parois, qui coopère avec l'échappement 76 du générateur de gaz 60, et dans lequel le premier ergol peut circuler. A cet effet, le premier échangeur thermique 74 peut être alimenté par une première conduite de piquage 78 reliée à la première conduite d'alimentation 62. En l'espèce, cette liaison est réalisée en amont de la première vanne d'alimentation 66. En l'espèce, la première conduite de piquage 78 est reliée à la première conduite d'alimentation 62 par une vanne de piquage 80 qui peut être ouverte ou fermée pour autoriser ou non l'alimentation du premier échangeur thermique 74 en premier ergol. La sortie du premier échangeur thermique 74 est reliée au premier réservoir 16 par une première conduite de retour 82 de sorte que le premier ergol vaporisé dans le premier échangeur thermique 74 vient alimenter le ciel gazeux du premier réservoir 16.

Le deuxième échangeur thermique 90 coopère avec le générateur de gaz 60 pour vaporiser du deuxième ergol l'alimentation en deuxième ergol étant réalisée par la deuxième motopompe. Par exemple, ce deuxième échangeur thermique 90 peut comprendre un tube à double paroi disposé autour de l'échappement 76 du générateur de gaz 60. Ce deuxième échangeur thermique 90 peut être alimenté en deuxième ergol par une deuxième conduite de piquage 94 reliée à la deuxième conduite d'alimentation 68. En l'espèce, cette liaison est réalisée en amont de la deuxième vanne d'alimentation 72. En l'espèce, la deuxième conduite de piquage 94 est reliée à la deuxième conduite d'alimentation 68 par une vanne de piquage 88 qui peut être ouverte ou fermée pour autoriser ou non l'alimentation du deuxième échangeur thermique en deuxième ergol. La sortie du deuxième échangeur thermique 90 est reliée au deuxième réservoir 18 par une conduite de retour 100 de sorte que le deuxième ergol vaporisé dans le deuxième échangeur thermique 90 peut-être réinjecté dans le ciel gazeux du deuxième réservoir 18 via le système de vannes 47.

Sur la figure 1, les flèches représentent le sens de circulation des ergols dans les circuits hydrauliques. La figure 1 représente un état où le moteur-fusée 10 est en fonctionnement (phase de propulsion), i.e. une phase où une combustion est réalisée dans la chambre de combustions 12, de sorte que la régulation de la pression dans le deuxième réservoir 18 est réalisée de manière connue par ailleurs par le système 47, la vanne 88 étant fermée. Lorsque le moteur-fusée 10 ne fonctionne pas (phase balistique), i.e. phase où aucune combustion n'est réalisée dans la chambre de combustion 12, la vanne 88 est ouverte de sorte que la régulation de la pression dans le deuxième réservoir est réalisée de manière connue par ailleurs à l'aide le deuxième échangeur thermique 90 et du système 47.

Dans cet exemple, pour la régulation de la pression au sein du premier réservoir 16, le moteur-fusée 10 comprend également une unité de commande 110 reliée à un capteur de pression 112 pour mesurer la pression au sein du premier réservoir 16 et à un capteur de température 114 pour mesurer la température au sein du générateur de gaz 60. L'unité de commande 110 est également reliée aux première et deuxième motopompes 64 et 70 pour piloter leur débit respectif. On notera que les liaisons avec l'unité de commande 110 sont représentées en traits discontinus pour les distinguer des circuits d'ergols précédemment décrits.

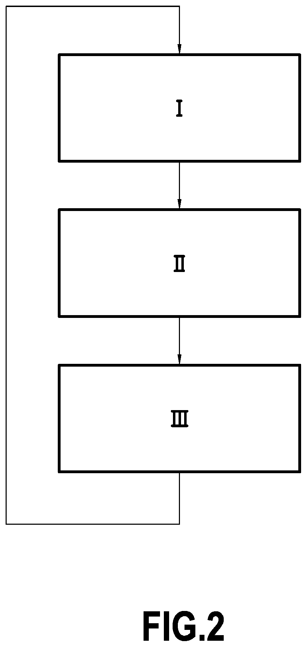

Le procédé de régulation de la pression au sein du premier réservoir 16 va maintenant être décrit en référence à la figure 2.

Au cours de l'étape I, on mesure la pression réelle Pr au sein du premier réservoir 16 et la température réelle Tr au sein du générateur de gaz 60. Au cours de l'étape II, on compare la pression réelle Pr avec une pression prédéterminée P et on compare la température réelle Tr avec une température prédéterminée T. Au cours de l'étape III, on pilote le débit de la première turbopompe 64 en fonction du résultat de la comparaison entre la pression réelle Pr et la pression prédéterminée P de manière à réduire l'écart entre la pression réelle et la pression prédéterminée tandis qu'on pilote le débit de la deuxième turbopompe 70 en fonction du résultat de la comparaison entre la température réelle Tr et la température prédéterminée T de manière à réduire l'écart entre la température réelle et la température prédéterminée. Dans cet exemple, l'unité de commande 110 exécute les différentes étapes de ce procédé. Ainsi, en pilotant le débit de chacune des motopompes 64 et 70, on régule la pression au sein du premier réservoir 16 de manière pérenne, c'est-à-dire tout en assurant le bon fonctionnement du générateur de gaz 60. Bien entendu, lorsque l'étape III est terminée, on reprend le procédé à partir de l'étape I pour assurer une régulation continue de la pression au sein du premier réservoir.

Bien sûr, la mesure et la comparaison de la pression réelle au sein du premier réservoir avec la pression prédéterminée et la mesure et la comparaison de la température réelle au sein du générateur de gaz avec la température prédéterminée peuvent être réalisées simultanément ou séquentiellement, ou encore de manière parallèle au sein de deux sous-procédés indépendants ou couplées. De même le pilotage de la première et de la deuxième motopompe peut être réalisé simultanément, de manière séquentielle, ou encore de manière parallèle au sein de deux sous-procédés indépendants ou couplées.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposable, seules ou en combinaison, à un dispositif, et inversement, toutes les caractéristiques décrites en référence à un dispositif sont transposables, seules ou en combinaison, à un procédé.

## Revendications

1. Procédé de régulation de pression au sein d'un premier réservoir d'ergol de moteur-fusée, ledit moteur-fusée (10) comprenant un premier réservoir d'ergol (16) contenant un premier ergol et un deuxième réservoir d'ergol (18) contenant un deuxième ergol distinct du premier ergol, et un dispositif de régulation de le pression au sein du premier réservoir comprenant un générateur de gaz (60) et un échangeur thermique (74) coopérant avec le générateur de gaz (60) de manière à vaporiser du premier ergol avant sa réintroduction dans le premier réservoir (16), le générateur de gaz (60) et l'échangeur thermique (74) étant tous les deux alimentés en premier ergol par une unique première motopompe (64) à débit variable tandis que le générateur de gaz (60) est alimenté en deuxième ergol par une unique deuxième motopompe (70) à débit variable, **caractérisé en ce que** le débit de la première motopompe (64) est piloté en fonction d'un premier paramètre tandis que le débit de la deuxième motopompe (70) est piloté en fonction d'un deuxième paramètre distinct du premier paramètre.

2. Procédé de régulation selon la revendication 1, dans lequel le premier paramètre est la pression au sein du premier réservoir (16).

3. Procédé de régulation selon la revendication 1 ou 2, dans lequel le deuxième paramètre est la température du générateur de gaz (60).

4. Procédé selon l'une quelconque des revendications 1 à 3, dans lequel le débit de la première motopompe (64) est piloté uniquement en fonction du premier paramètre tandis que le débit de la deuxième motopompe (70) est piloté uniquement en fonction du deuxième paramètre.

5. Procédé de régulation selon l'une quelconque des revendications 1 à 4, dans lequel le premier ergol et le deuxième ergol sont des ergols liquides cryogéniques.

6. Procédé de régulation selon l'une quelconque des revendications 1 à 5, dans lequel le premier ergol est de l'oxygène tandis que le deuxième ergol est de l'hydrogène ou du méthane.

7. Programme d'ordinateur comportant des instructions pour l'exécution du procédé de régulation de pression selon l'une quelconque des revendications 1 à 6 lorsque ledit programme est exécuté par un ordinateur.

8. Support d'enregistrement lisible par ordinateur sur lequel est enregistré le programme d'ordinateur selon la revendication 7.

## Patentansprüche

1. Verfahren zur Druckregulierung in einem ersten Treibmitteltank eines Raketenmotors, wobei der Raketenmotor (10) einen ersten Treibmitteltank (16), der ein erstes Treibmittel enthält, und einen zweiten Treibmitteltank (18), der ein von dem ersten Treibmittel verschiedenes zweites Treibmittel enthält, und eine Vorrichtung zur Druckregulierung in dem ersten Tank aufweist, die einen Gasgenerator (60) und einen Wärmetauscher (74) umfasst, der mit dem Gasgenerator (60) so zusammenwirkt, dass das erste Treibmittel vor seiner Wiedereinleitung in den ersten Tank (16) verdampft wird, wobei der Gasgenerator (60) und der Wärmetauscher (74) beide von einer einzigen ersten Motorpumpe (64) mit variablem Durchfluss mit dem ersten Treibmittel versorgt werden, während der Gasgenerator (60) von einer einzigen zweiten Motorpumpe (70) mit variablem Durchfluss mit dem zweiten Treibmittel versorgt wird, **dadurch gekennzeichnet, dass** die Durchflussrate der ersten Motorpumpe (64) in Abhängigkeit von einem ersten Parameter gesteuert wird, während die Durchflussrate der zweiten Motorpumpe (70) in Abhängigkeit von einem zweiten Parameter gesteuert wird, der sich von dem ersten Parameter unterscheidet.

2. Regulierungsverfahren gemäß Anspruch 1, wobei der erste Parameter der Druck innerhalb des ersten Tanks (16) ist.

3. Regulierungsverfahren gemäß Anspruch 1 oder 2, wobei der zweite Parameter die Temperatur des Gasgenerators (60) ist.

4. Verfahren gemäß einem der Ansprüche 1 bis 3, wobei die Durchflussrate der ersten Motorpumpe (64) nur in Abhängigkeit vom ersten Parameter gesteuert wird, während die Durchflussrate der zweiten Motorpumpe (70) nur in Abhängigkeit vom zweiten Parameter gesteuert wird.

5. Regulierungsverfahren gemäß einem der Ansprüche 1 bis 4, wobei das erste Treibmittel und das zweite Treibmittel kryogene flüssige Treibmittel sind.

6. Regulierungsverfahren gemäß einem der Ansprüche 1 bis 5, wobei das erste Treibmittel Sauerstoff ist, während das zweite Treibmittel Wasserstoff oder Methan ist.

7. Computerprogramm mit Anweisungen zur Ausführung des Verfahrens zur Druckregulierung gemäß einem der Ansprüche 1 bis 6, wenn das Programm von einem Computer ausgeführt wird.

8. Computerlesbares Aufzeichnungsmedium, auf dem das Computerprogramm nach Anspruch 7 aufgezeichnet ist.

## Claims

1. A regulation method for regulating pressure within a first rocket engine propellant tank, said rocket engine (10) having a first propellant tank (16) containing a first propellant and a second propellant tank (18) containing a second propellant that is different from the first propellant, and a regulator device for regulating pressure within the first tank, the regulator device comprising a gas generator (60) and a heat exchanger (74) co-operating with the gas generator (60) so as to vaporize at least part of the first propellant prior to reintroducing it into the first tank (16), the gas generator (60) and the heat exchanger (74) both being fed with the first propellant by a single first variable-flowrate motor-driven pump (64), while the gas generator (60) is fed with the second propellant by a single second variable-flowrate motor-driven pump (70), the method being **characterized in that** the flow rate of the first motor-driven pump (64) is controlled as a function of a first parameter, while the flow rate of the second motor-driven pump (70) is controlled as a function of a second parameter distinct from the first parameter.

2. A regulation method according to claim 1, wherein the first parameter is the pressure within the first tank (16) .

3. A regulation method according to claim 1 or claim 2, wherein the second parameter is the temperature of the gas generator (60).

4. A regulation method according to any one of claims 1 to 3, wherein the flow rate of the first motor-driven pump (64) is controlled solely as a function of the first parameter, while the flow rate of the second motor-driven pump (70) is controlled solely as a function of the second parameter.

5. A regulation method according to any one of claims 1 to 4, wherein the first propellant and the second propellant are cryogenic liquid propellants.

6. A regulation method according to any one of claims 1 to 5, wherein the first propellant is oxygen and the second propellant is hydrogen or methane.

7. A computer program including instructions for executing the pressure regulation method according to any one of claims 1 to 6 when said program is executed by a computer.

8. A computer readable data medium containing the computer program of claim 7.
